(19) Europäisches Patentamt

European Patent Office

Office européen des brevets

(11) Publication number: **0 425 729 B1**

(12) **EUROPEAN PATENT SPECIFICATION**

(45) Date of publication of patent specification: **02.02.94** (51) Int. Cl.5: **A01N 43/56**, A01N 25/04

(21) Application number: **89120310.1**

(22) Date of filing: **02.11.89**

(54) **Stabilized-aqueous pesticidal suspension concentrate.**

(43) Date of publication of application:
**08.05.91 Bulletin 91/19**

(45) Publication of the grant of the patent:
**02.02.94 Bulletin 94/05**

(84) Designated Contracting States:
**DE ES FR GB IT NL**

(56) References cited:
**EP-A- 0 033 291**
**EP-A- 0 234 045**
**FR-A- 2 554 683**

(73) Proprietor: **NIHON NOHYAKU CO., LTD.**
**1-2-5, Nihonbashi**
**Chuo-ku Tokyo(JP)**

(72) Inventor: **Kose, Sumitaka**
**20-8, Awaji-1-chome**
**Higashiyodogawa-ku Osaka(JP)**
Inventor: **Takatori, Naohiko**
**7-20, Nigawa**
**Yurinocho**
**Nishinomiya-shi(JP)**
Inventor: **Fukada, Minoru**
**39-13, Yabumachi**
**Tosu-shi(JP)**

(74) Representative: **Patentanwälte Grünecker,**
**Kinkeldey, Stockmair & Partner**
**Maximilianstrasse 58**
**D-80538 München (DE)**

## Description

The present invention relates to a stabilized aqueous pesticidal suspension concentrate comprising t-butyl 4-[(1,3-dimethyl-5-phenoxypyrazol-4-yl)methyleneaminooxymethyl]benzoate (this compound is hereinafter referred to as "the present compound").

Preparation forms of agricultural chemicals include, for example, dusting powders, granules, wettable powders, emulsifiable concentrates and aqueous suspension concentrates. These preparation forms are chosen depending on the purposes of their use. Of these, dusts have the problem that they drifting to the environs when applied. Wettable powders are subject to heavy dusting at the time of preparation of a spray mix since such wettable powders are composed of fine particles, and thus they pose the problem of injurious effects to the human body unless a sufficient protective means is taken. Emulsifiable concentrates are disadvantageous because the types of raw material pesticides which can be used as an emulsion are limited since such raw material pesticides need to be easily soluble in organic solvents; and the use of organic solvents has injurious effects on the health of workers and sprayers when prepared and applied unless a suitable countermeasure is taken.

Due to these problems, aqueous suspension concentrates have been often used in recent years for the following reasons. As compared with the other preparation forms, they have less phytoxicity to crops, are safer when prepared and applied because of no use of an organic solvent, and are suited for aerial application.

An aqueous suspension concentrate is a preparation form obtained by suspending fine particles of a raw material pesticide which is solid at ordinary temperatures and hardly or not soluble in water, uniformly in water or a hydrophilic solvent by an addition of a surfactant, and adding a variety of thickeners thereto in order to prevent a precipitation of the solid raw material pesticide during a long period of storage.

Conventional aqueous suspension concentrates are, however, poor in long-term physical stability. For attaining an excellent long-term physical stability, it is important to choose a proper combination of physical properties of a raw material pesticide and a thickener as well as a proper adding amount of the thickener in order to disperse the raw material pesticide uniformly in water or a hydrophilic solvent. Depending on the kind and the amount of the thickener, fine particles of the raw material pesticide will be precipitated or its viscosity will be too high; and as a result, the aqueous suspension concentrate will be unusable.

Therefore, the choice of a thickener suitable for the physical properties of the raw material pesticide and the adding amount of the thickener are important factors for obtaining a stabilized aqueous pesticidal suspension concentrate.

The present compound is useful as an acaricide. It is used in admixture with a Bordeaux mixture in certain areas; in this case, it is necessary to devise a recipe which prevents the present compound from being flocculated when used in admixture with a Bordeaux mixture. Accordingly, it is the object underlying the present invention to provide an aqueous pesticidal suspension concentrate which is capable of retaining uniform dispersibility for a long time and which permits a preparation of a liquid spray which is stable even when used in admixture with a Bordeaux mixture.

According to the present invention this object is attained with a stabilized aqueous pesticidal suspension concentrate comprising less than 50% by weight of t-butyl 4-[(1,3-dimethyl-5-phenoxypyrazol-4-yl)-methyleneaminoxymethyl]benzoate, 0.1 to 10.0% by weight of a Xanthan gum or at least one smectite type clay mineral as thickener, one or more surfactants, and water.

When a smectite type clay mineral is used as a thickener, said aqueous pesticidal suspension concentrate is not flocculated even when used in admixture with a Bordeaux mixture; and thus it permits a preparation of a stabilized liquid spray.

The present compound, i.e., the raw material pesticide of the present invention, is a compound disclosed as an insecticidal, acaricidal and fungicidal agent, for example, in Jap. Pat. Appln. Kokai (Laid-Open) No. 63-183564.

The using amount of the present compound is chosen in the range of less than 50% by weight, preferably in the range of less than 50% by weight and not less than 1% by weight.

As the surfactant usable in the present invention, there can be used one or more non-ionic surfactants or a combination of one or more non-ionic surfactants and one or more anionic surfactants. The non-ionic surfactants include, e.g., polyoxyethylene alkylphenol ethers, condensation products between polyoxyethylene alkylphenol ethers and form aldehyde, polyoxyethylene styrene-modified phenol, polyoxyethylene alkyl ethers, polyoxyethylene alkyl esters, polyoxyethylene sorbitan alkylstates and polyoxyalkylene glycols.

The anionic surfactants include, e.g., dialkyl sulfosuccinate, lignin sulfonate and polyoxyethylene alkylallyl ether sulfates.

2

These surfactants may be properly selected from commercially available ones. In this case, it is preferable to select them considering the HLB so as to attain a good balance in physicochemical properties of a liquid spray prepared from the aqueous pesticidal suspension concentrate of this invention.

One preferable embodiment of the present invention is a combination of two non-ionic surfactants and one anionic surfactant.

As to the mixing proportions of these surfactants, they may be mixed in any proportions; or commercially available ready-made composite surfactants may be used.

The blending proportions of the surfactants are chosen in the range of 0.1 to 10.0% by weight.

Xanthan gum is a high-molecular-weight linear extracellular substance produced by the action of bacteria belonging to the genus Xantomonas. This substance used for the present invention should be a natural product having a molecular weight exceeding 200,000, preferably over 1,000,000. As this substance, e.g., Kelzan® and Rhodopol® 23 are sold on the market.

As the smectite type clay mineral usable as thickener, natural and artificial smectite type clay minerals can be used. "Smectite" is usually a general term for a group of expansible clay minerals having structures formed by a substitution of various metal atoms in the clay structures of pyrophyllite and talc. Smectite includes, e.g., montororillonite, saponite, hectorite, beidellite, nontronite, sauconite and stevensite. Preferably, saponite is used. As commercially available smectite type clay minerals, there can be exemplified, e.g., Vangel® B, Kunipia® F and Laponite®.

The adding amount of the Xanthan gum or the smectite type clay mineral is chosen in the range of 0.1 to 10.0% by weight.

As a solvent usable in the aqueous pesticidal suspension concentrate of the present invention, water is basically used. Water may be used alone or if necessary, as a blend with one or more organic solvents selected from, e.g., hydrophilic solvents such as methyl alcohol, isopropyl alcohol, ethylene glycol, polyethylene glycol and propylene glycol. The blending proportion of the organic solvents is chosen in the range of 1 to 30% by weight.

If necessary, the aqueous pesticidal suspension concentrate of the present invention may contain substances other than the above ingredients, for example, a silicone-based defoaming agent composed mainly of dimethyl polysiloxane, in an amount of 5% by weight or less. It may also contain an antifreezing agent such as propylene glycol.

When a Xanthan gum is used as a thickener, it is preferable to add an antiseptic in an amount of 0.1 to 1% by weight in order to prevent the Xanthan gum from being putrefied. Commercially available antiseptics such as Proxel® GXL can be used.

As to a process for producing the aqueous pesticidal suspension concentrate of the present invention, it can be produced through a conventional process. For example, it is produced by mixing at least one surfactant and water, mixing a predetermined amount of a raw material pesticide therewith, and then, if necessary, a defoaming agent, followed by wet-milling, then adding a separately prepared mixture of water, a thickener, and optionally added antifreezing agent and antiseptic, and mixing them uniformly.

The Xanthan gum as a thickener may be added as it is. The smectite type clay mineral may be added in the form of either a powder or an aqueous dispersion previously prepared.

Examples and Test Examples

Examples and test examples of the present invention are shown below. In the examples, percents are all by weight.

Example 1

| The present compound | 5.10% |
| A mixture of polyoxyethylene alkylphenol ether, polyoxyethylene styrene-modified phenol and dialkyl sulfosuccinate (Sorpol® 3105) | 4.00% |
| Vamgel® B | 5.00% |
| Propylene glycol | 10.00% |
| Silicone KM-73 | 0.50% |
| Water | 75.40% |
| Total | 100.00% |

The above composition was prepared in the following manner.

15.40% by weight of water were mixed with 4.00% by weight of Sorpol® and then 5.10% by weight of the present compound, followed by adding thereto Silicone KM-73 (produced by The Shin-Etsu Chemical Co., Ltd.). After stirring in an ordinary stirrer (Homomixer, commercially available), the resulting mixture was finely ground by a commercially available wet-milling equipment. To the ground mixture was added a dispersion previously prepared by dispersing 5% by weight of Vamgel® B (composed mainly of saponite) and 10% by weight of propylene glycol in 60% by weight of water; and they were uniformly mixed to obtain a preparation in a proportion of 100% by weight.

Example 2

| The present compound | 5.10% |
|---|---|
| Sorpol - 3105 | 4.00% |
| Rhodopol 23 | 0.50% |
| Propylene glycol | 10.00% |
| Silicone KM-73 | 0.50% |
| Proxel GXL | 0.05% |
| Water | 79.85% |
| Total | 100.00% |

The above composition was prepared in the following manner.

15.40% by weight of water were mixed with 4.00% by weight of Sorpol® - 3105 and then 5.10% of the present compound, followed by adding thereto Silicone KM-73 (produced by The Shin-Etsu Chemical Co., Ltd.). After stirring in an ordinary stirrer (Homomixer, commercially available), the resulting mixture was finely ground by a commercially available wet-milling equipment. The ground mixture was mixed with a previously prepared dispersion by dispersing 10% by weight of propylene glycol and Proxel® GXL in 64.45% by weight of water; and 0.5% by weight of Rhodopol® 23 was added; and then they were uniformly mixed to obtain a preparation in a proportion of 100% by weight.

Example 3

| The present compound | 5.50% |
|---|---|
| Polyoxyethylene nonylphenol ether (NPE-100) | 0.70% |
| Polyoxyethylene styrene-modified phenol (Penerol® SP-2440) | 1.00% |
| Formaldehyde condensate of polyoxyethylene nonylphenol ether (BNP-3040) | 1.50% |
| Vamgel® B | 5.00% |
| Propylene glycol | 10.00% |
| Silicone KM-73 | 0.25% |
| Water | 76.05% |
| Total | 100.00% |

A preparation was prepared from the above ingredients in a proportion of 100% in the same manner as in Example 1.

Example 4

| The present compound | 11.00% |
|---|---|
| SP-3105 | 4.00% |
| Rhodopol® 23 | 0.30% |
| Propylene glycol | 10.00% |
| Silicone KM-73 | 0.25% |
| Proxel® GXL | 0.05% |
| Water | 74.40% |
| Total | 100.00% |

A preparation was prepared from the above ingredients in a proportion of 100% in the same manner as in Example 2.

Example 5

| The present compound | 5.50% |
|---|---|
| Polyoxyethylene nonylphenol ether (NPE-100) | 0.70% |
| Polyoxyethylene styrene-modified phenol (Penerol® SP-2440) | 1.00% |
| Formaldehyde condensate of polyoxyethylene nonylphenol ether (NBP-3040) | 1.50% |
| Rhodopol® 23 | 0.50% |
| Propylene glycol | 10.00% |
| Silicone KM-73 | 0.25% |
| Proxel® GXL | 0.05% |
| Water | 80.50% |
| Total | 100.00% |

A preparation was prepared from the above ingredients in a proportion of 100% in the same manner as in Example 2.

Examples 6 to 10 and Comparative Examples 1 to 10

In Table 1 Examples 6 to 10 and Comparative Examples 1 to 10 in which the process of Example 2 was repeated except that the adding amount or the kind of thickner was changed, respectively, are shown.

Table 1

| | The invention | | | | | Comp. Example 1 | Comp. Example 2 |
|---|---|---|---|---|---|---|---|
| | Example 6 | Example 7 | Example 8 | Example 9 | Example 10 | | |
| The present compound | 11.00 | 5.50 | 11.00 | 5.50 | 5.50 | 5.50 | 5.50 |
| | 4.00 | 4.00 | 4.00 | 4.00 | 4.00 | 4.00 | 4.00 |
| Propylene glycol | 10.00 | 10.00 | 10.00 | 10.00 | 10.00 | 10.00 | 10.00 |
| Silicone KM-73 | 0.25 | 0.25 | 0.25 | 0.25 | 0.25 | 0.25 | 0.25 |
| Vangel® B | 3.00 | – | – | – | – | – | – |
| Kunipia® F | – | 4.00 | 2.00 | – | – | – | – |
| Rhodopol® | – | – | – | 0.35 | 0.40 | – | – |
| Tragacanth gum | – | – | – | – | – | 0.60 | – |
| Gum arabic | – | – | – | – | – | – | 3.00 |
| Pectin | – | – | – | – | – | – | – |
| Sodium alginate | – | – | – | – | – | – | – |
| Carboxymethyl cellulose | – | – | – | – | – | – | – |
| Hydroxypropyl cellulose | – | – | – | – | – | – | – |
| Jaguar HP-11 | – | – | – | – | – | – | – |

Table 1   (Cont'd)

| | | | | | | | |
|---|---|---|---|---|---|---|---|
| Polyvinyl alcohol | - | - | - | - | - | - | - |
| Polyvinyl pyrrolidone | - | - | - | - | - | - | - |
| Sodium polyacrylate | - | - | - | - | - | - | - |
| Proxel®GXL | - | - | - | 0.05 | 0.05 | - | - |
| Water | 71.75 | 76.25 | 72.75 | 75.25 | 75.25 | 79.65 | 77.25 |
| Total | 100.00 | 100.00 | 100.00 | 100.00 | 100.00 | 100.00 | 100.00 |

Note:   Jaguar HP-11 is semisynthetic thickener (common name: hydroxy-propylated guar gum) produced by hydroxypropylating a thickener obtained from a plant belonging to Leguminosae genus, guar gum.

EP 0 425 729 B1

Table 1   (Cont'd)

| For comparison | | | | | | | |
| Comp. Example 3 | Comp. Example 4 | Comp. Example 5 | Comp. Example 6 | Comp. Example 7 | Comp. Example 8 | Comp. Example 9 | Comp. Example 10 |
| --- | --- | --- | --- | --- | --- | --- | --- |
| 5.50 | 5.50 | 5.50 | 5.50 | 5.50 | 5.50 | 5.50 | 5.50 |
| 4.00 | 4.00 | 4.00 | 4.00 | 4.00 | 4.00 | 4.00 | 4.00 |
| 10.00 | 10.00 | 10.00 | 10.00 | 10.00 | 10.00 | 10.00 | 10.00 |
| 0.25 | 0.25 | 0.25 | 0.25 | 0.25 | 0.25 | 0.25 | 0.25 |
| – | – | – | – | – | – | – | – |
| – | – | – | – | – | – | – | – |
| – | – | – | – | – | – | – | – |
| – | – | – | – | – | – | – | – |
| – | – | – | – | – | – | – | – |
| 0.60 | – | – | – | – | – | – | – |
| – | 0.20 | – | – | – | – | – | – |
| – | – | 0.20 | – | – | – | – | – |
| – | – | – | 0.60 | – | – | – | – |
| – | – | – | – | 0.20 | – | – | – |

- To be continued -

EP 0 425 729 B1

Table 1 (Cont'd)

| | | | | | | | |
|---|---|---|---|---|---|---|---|
| — | — | 3.00 | — | — | — | — | — |
| — | 4.54 | — | — | — | — | — | — |
| 0.20 | — | — | — | — | — | — | — |
| — | — | — | — | — | — | — | — |
| 80.05 | 75.75 | 77.25 | 80.05 | 79.65 | 80.05 | 80.05 | 79.65 |
| 100.00 | 100.00 | 100.00 | 100.00 | 100.00 | 100.00 | 100.00 | 100.00 |

Test Example 1

[Physical stability (sediment volume ratio)] Sediment Volume Ratio:

In a graduated measuring cylinder with a ground stopper having an inner diameter of 1.3 cm and a capacity of 20 ml were placed 20 ml each of the preparations of Examples 1 to 10 and Comparative Examples 1 to 10, which were allowed to stand at 25 °C for 3 months. The volume V (ml) occupied by the sedimented particles was measured; and its ratio to the total volume is calculated from the equation described below. The calculated value was given as an index of the physical stability of the preparation.

9

Sediment volume ratio $= \frac{V}{20} \times 100$

The results obtained are shown in Table 2.

Table 2

| The invention | | For comparison | |
|---|---|---|---|
| Example No. | Sediment volume ratio | Comparative Example No. | Sediment volume ratio |
| 1 | 100 | 1 | 58 |
| 2 | 98 | 2 | 36 |
| 3 | 100 | 3 | 32 |
| 4 | 100 | 4 | 38 |
| 5 | 99 | 5 | 34 |
| 6 | 99 | 6 | 34 |
| 7 | 99 | 7 | 30 |
| 8 | 100 | 8 | 40 |
| 9 | 100 | 9 | 33 |
| 10 | 100 | 10 | 35 |

The preparations of the present invention containing the heteropolysaccharides or smectite type clay minerals of the present invention as a thickener were aqueous pesticidal suspension concentrates whose active ingredient particles were more homogeneous and more stable for a long period of time than those of the preparations containing other thickeners.

Test Example 2

[Mixing test with Bordeaux mixture]

In a graduated measuring cylinder with a ground stopper having an inner diameter of 38.9 mm and a capacity of 250 ml were placed 250 ml of a Bordeaux mixture (4 - 12 type), followed by adding thereto 1 ml of each of the preparations of Examples 1, 3, 6 and 7 and Comparative Examples 1 to 10. The cylinder was turned upside down 10 times at a rate of one turn per 2 s; and the dispersed state of the preparation placed in the cylinder was observed. Then, the mixture in the cylinder was passed through a sieve of 0.104 mm meshes. The existence of residue on the sieve was investigated. The results obtained are shown in Table 3. In the "uniform dispersibility" column, a uniform dispersion is expressed by ○ while no dispersion by X. In the "residue" column, no residue is expressed by - while the presence of residue by +.

Table 3

| The invention | | | For comparison | | |
|---|---|---|---|---|---|
| Example No. | Uniform dispersibility | Residue | Comparative Example No. | Uniform dispersibility | Residue |
| 1 | ○ | - | 1 | X (gelation) | + |
| 3 | ○ | - | 2 | ○ | - |
| 6 | ○ | - | 3 | X (gelation) | + |
| 7 | ○ | - | 4 | X (gelation) | + |
| | | | 5 | ○ | - |
| | | | 6 | ○ | - |
| | | | 7 | X | + |
| | | | 8 | ○ | - |
| | | | 9 | ○ | - |
| | | | 10 | X | + |

The preparations of the present invention containing the smectite type clay minerals of the present invention as a thickener were not flocculated at all even when used in admixture with the Bordeaux mixture. Thus, they are more stable aqueous pesticidal suspension concentrates than the preparations containing the other thickeners.

## Claims

1. A stabilized aqueous pesticidal suspension concentrate comprising less than 50% by weight and not less than 1% by weight of t-butyl 4-[(1,3-dimethyl-5-phenoxypyrazol-4-yl)methyleneaminoxymethyl]-benzoate, 0.1 to 10.0% by weight of a Xanthan gum or at least one smectite type clay mineral as thickener, one or more surfactants, and water.

2. The aqueous pesticidal suspension concentrate according to claim 1, wherein the Xanthan gum has a molecular weight of 1,000,000 or more.

3. The aqueous pesticidal suspension concentrate according to claim 1, wherein the smectite type clay mineral is selected from the group consisting of montmorillonite, saponite, hectorite, beidellite, nontronite, sauconite and stevensite.

4. The aqueous pesticidal suspension concentrate according to claim 4, wherein the smectite type clay mineral is saponite.

5. The aqueous pesticidal suspension concentrate according to claim 1, wherein the surfactants are one or more non-ionic surfactants or a combination of one or more non-ionic surfactants and one or more anionic surfactants.

6. The aqueous pesticidal suspension concentrate according to claim 6, wherein the blending proportion of the surfactants is 0.1 to 10.0% by weight.

## Patentansprüche

1. Stabilisiertes, wäßriges pestizides Suspensionskonzentrat, umfassend weniger als 50 Gew.-% und nicht weniger als 1 Gew.-% t-Butyl-4-[(1,3-dimethyl-5-phenoxypyrazol-4-yl)methylenaminooxymethyl]benzoat, 0,1 bis 10,0 Gew.-% Xanthangummi oder wenigstens ein Tonmineral vom Seifenerde-Typ als Verdickungsmittel, ein oder mehrere oberflächenaktive Mittel und Wasser.

2. Wäßriges pestizides Suspensionskonzentrat nach Anspruch 1, worin das Xanthangummi ein Molekulargewicht von 1.000.000 oder mehr hat.

3. Wäßriges pestizides Suspensionskonzentrat nach Anspruch 1, worin das Tonmineral vom Seifenerde-Typ ausgewählt ist aus der Gruppe, bestehend aus Walkton, Saponit, Hectorit, Beidellit, Nontronit, Sauconit, und Stevensit.

4. Wäßriges pestizides Suspensionskonzentrat nach Anspruch 3, worin das Tonmineral vom Seifenerde-Typ Saponit ist.

5. Wäßriges pestizides Suspensionskonzentrat nach Anspruch 1, worin die oberflächenaktiven Mittel ein oder mehrere nicht-ionische oberflächenaktive Mittel sind oder eine Kombination von einem oder mehreren nicht-ionischen oberflächenaktiven Mitteln und einem oder mehreren anionischen oberflächenaktiven Mitteln.

6. Wäßriges pestizides Suspensionskonzentrat nach Anspruch 5, worin das Mischverhältnis der oberflächenaktiven Mittel von 0,1 bis 10 Gew.-% ist.

## Revendications

1. Concentré stabilisé d'une suspension aqueuse pesticide comprenant moins de 50 % en poids, et pas moins de 1 % en poids, de 4-[(1,3-diméthyl-5-phénoxypyrazol-4-yl)méthylène-aminoxyméthyl]benzoate de t-butyle, 0,1 à 10,0 % en poids d'une gomme de xanthane ou d'au moins un minéral d'argile de type smectite comme épaississant, un ou plusieurs agent(s) tensioactif(s), et de l'eau.

2. Concentré d'une suspension pesticide aqueuse selon la revendication 1, dans lequel la gomme de xanthane a un poids moléculaire de 1.000.000 ou plus.

3. Concentré d'une suspension pesticide aqueuse selon la revendication 1, dans lequel le minéral d'argile de type smectite est choisi parmi le groupe constitué de la montmorillonite, de la saponite, de l'hectorite, de la béidellite, de la nontronite, de la sauconite et de la stévensite.

4. Concentré d'une suspension pesticide aqueuse selon la revendication 3, dans lequel le minéral d'argile de type smectite est la saponite.

5. Concentré d'une suspension pesticide aqueuse selon la revendication 1, dans lequel les agents tensioactifs sont un ou plusieurs agent(s) tensioactif(s) non ionique(s) ou une combinaison d'un ou plusieurs agent(s) tensioactif(s) non ionique(s) et d'un ou plusieurs agent(s) tensioactif(s) anionique(s).

6. Concentré d'une suspension pesticide aqueuse selon la revendication 5, dans lequel la proportion de mélange des agents tensioactifs est de 0,1 à 10,0 % en poids.